# EUROPÄISCHE PATENTANMELDUNG

(11) **EP 1 728 712 A1**
(43) Veröffentlichungstag der Anmeldung: **06.12.2006**
(21) Anmeldenummer: 05011787.8
(22) Anmeldetag: 01.06.2005
(51) Int. Cl.: B62L 5/00

(54) **Tretlager für Fahrräder**

(71) Anmelder: AUMAT Maschinenbau GmbH, 42699 Solingen (DE)
(72) Erfinder: Trommlitz, Joachim, 42651 Solingen (DE); Bracht, Lothar, 42349 Wuppertal (DE)
(74) Vertreter: Bracht, Lothar

(57) **Zusammenfassung**

Gezeigt ist ein Tretlager (1) für Fahrräder mit einer Tretkurbelwelle (3), einem Gehäuse (5), in dem die Tretkurbelwelle (3) drehbar gelagert ist, und in dem die Tretkurbelwelle (3) gegen axiale Verschiebung gesichert ist, einem Kettenritzel (7) mit einer bei Vorwärtsdrehung drehfesten Verbindung, mit der Tretlagerwelle (3) mittels der trennbaren Kupplung (10) im Gehäuse (5) und Freilauf- und Überholwirkung bei Stillstand oder Rückwärtsdrehung der Tretlagerwelle (3) und mit einem aus dem Gehäuse (5) herausgeführten Bremsstrang (14) mit einer bei Rückwärtsdrehung drehfesten Verbindung mit der Tretlagerwelle (3) mittels der trennbaren Kupplung (16) im Gehäuse (5) und Freilaufwirkung der Bremskupplung (16) bei Vorwärtsdrehung der Tretlagerwelle (3) und mit einem durch die Tretlagerwelle (3) betätigten Schiffchen (18), das alternativ die Ritzelkupplung (10) kuppelt, die Bremskupplung (16) kuppelt oder in einer Zwischenposition (20) beide Kupplungen (10, 16) trennt.

## Beschreibung

Die Erfindung betrifft ein Tretlager für Fahrräder mit einer Tretkurbelwelle, einem Gehäuse, in dem die Tretkurbelwelle drehbar gelagert ist, und in dem die Tretkurbelwelle gegen axiale Verschiebung gesichert ist, sowie einem Kettenritzel mit einer drehfesten Verbindung mit der Tretkurbelwelle.

Tretlager der eingangs genannten Art sind in der Praxis durchgängig zu finden.
Weiterhin sind Rücktrittnaben bekannt, die im Hinterrad des Fahrrades angeordnet sind und die eine Fußbremse für den Fahrradfahrer darstellen. Diese Rücktrittbremsen lassen sich nicht problemlos mit den heute üblichen Kettenschaltungen kombinieren, weil der Umwerfer am Hinterrad der Verwendung einer Rücktrittnabe hinderlich im Wege steht. Bei ungünstiger Schaltposition kann der Umwerfer durch die Kette bei Verwendung einer Rücktrittnabe beschädigt werden und weiterhin verlangt der Umwerfer einen langen Winkelweg beim Zurücktreten des Pedals. Das kann dazu führen, daß der wirksame Hebelarm des Pedals in der sich dann einstellenden Bremsposition des Pedals keine ausreichende Bremswirkung mehr hervorbringt, obwohl der Fahrradfahrer sein ganzes Gewicht auf das Pedal bringt.
Deshalb haben die meisten heute verkauften Fahrräder keine Rücktritt-Nabenbremsen mehr, es werden aber auch Nabenschaltungen angeboten, die sich mit einer Rücktritt - Nabenbremse kombinieren lassen, die Nabenschaltungen sind den Kettenschaltungen aber in einigen Hinsichten unterlegen und treten deshalb zahlenmäßig hinter die Kettenschaltungen zurück. Auch hat die Nabenbremse bei längeren Abfahrten ein Problem mit der Wärmeabfuhr.
Dem steht der Wunsch vieler, insbesondere ängstlicher, Menschen gegenüber, auf die Ihnen lieb gewordene Rücktrittbremse zurückzugreifen. Dies gibt Ihnen ein besseres Gefühl der Sicherheit, insbesondere weil die Befürchtung besteht, daß die Kraft der Hände bei längeren Bremsmanövern nicht ausreichen könnte oder die Bremshebel nicht so schnell greifbar sein könnten.

Der Erfindung liegt von daher die Aufgabe zugrunde, eine Rücktrittbremse zu entwickeln, die ohne Abstriche bei Bedienung und Bremswirkung auch bei Kettenschaltungen einsetzbar ist.

Die Lösung dieser Aufgabe ist in Anspruch 1 wiedergegeben. Mit der erfindungsgemäßen Lösung wird ein Tretlager gezeigt, das sich zusammen mit an sich bekannten Bowdenzügen oder Hydraulikleitungen zu einer Rücktrittbremse ergänzt, die mit ihrem aus dem Tretlager herausgeführten Bremsstrang auf die, insbesondere bei Kettenschaltungen üblichen Felgenbremsen oder auch auf die heute mehr und mehr zur Anwendung kommenden Scheibenbremseneinwirken kann. Dabei soll der Bremsstrang zusätzlich zu den Handbremsen - z. B. mit einer Bremswippe - auf die gleichen Bremsanlagen einwirken.
Die Erfindung eröffnet auch die Möglichkeit, mit dem Bremsstrang eine nur geringfügig zu modifizierende Naben- Scheiben-, oder Trommelbremse in einem der beiden Räder, insbesondere im Hinterrad, mit Hilfe einer Schubstange oder eines Bowdenzuges zu betätigen. Mit der Erfindung werden Elemente, die aus einer Rücktrittnabe bekannt sind, verwandt und in geeigneter Weise auf das Tretlager und die eigentliche Bremse aufgeteilt und angepaßt, so daß ein Rücktritt ohne Inanspruchnahme der beim Fahrrad standardmäßig vorhandenen Kette, vom Pedal ausgehend, möglich ist.
Das erfindungsgemäße Tretlager erlaubt es, den herkömmlichen Freilauf im Hinterrad wegfallen zu lassen. Die Kette würde z. B. bei

Bergabfahrt zwar mitlaufen, aber nur zu minimalen Reibungsverlusten im Tretlager führen.

In einer bevorzugten Ausgestaltung der Erfindung ist vorgesehen, daß die Kupplungselemente reibschlüssig kuppeln. Das erlaubt sanfte Bremsmanöver und eine konstruktiv einfacher einstellbare Bremskraft.
Alternativ sind aber auch Ratschenkupplungen vorgesehen, wie sie speziell bei Fahrrädern als Freilauf hinlänglich bekannt sind. In vorteilhafter Weiterbildung der Erfindung sind die Kupplungen als Konus-Kupplungen ausgebildet. Dadurch wird eine einfache bauliche Ausführung ermöglicht, die auf einem wetttbewerbsintensiven Markt einen Kostenvorteil verspricht.
Nach einer alternativen Ausgestaltung der Erfindung ist vorgesehen, daß die Kupplungen als Freilaufkupplungen ausgebildet sind. Auch diese Freilaufkupplungen sollen vorzugsweise reibschlüssig wirken, um abrupt auftretende Bremswirkungen zu vermeiden. Diese Ausgestaltung der Erfindung soll auch mit Ratschenfreiläufen ausgeführt werden, wie sie im Zusammenhang mit Fahrrädern verbreitet sind. Die Freilaufkupplungen haben neben dem einsinnigen Freilauf und der gegensinnigen Mitnahme eine dritte Schaltstellung, die als Leerlauf ausgebildet ist und in der beide in ihrer Drehverbindung schaltbaren Elemente in beiden Richtungen frei drehen können. Hierzu werden die jedem reibschlüssig wirkenden Freilauf eigenen Klemmkörper von dem Fahrradfahrer betätigt bzw. gesteuert. Bei Ratschenfreiläufen werden die Sperrelemente oder Sperrklinken vom Fahrradfahrer durch die Pedalbewegung gesteuert.
Alternativ kann bei konisch ausgebildeten Klemmkörpern oder Sperrelementen zur Schaltung des Leerlaufs bzw. des Freilaufs eines der an- oder abtriebsseitigen Kupplungselemente mit entsprechend gegenkonischer Geometrie in axialer Richtung verschoben werden. Das stellt eine Kombination von Kegelkupplung und Freilauf dar. In Weiterbildung der Freilauflösung wird vorgeschlagen, daß das Tretlager zwei Freiläufe in seinem Gehäuse umfaßt, die unterschiedliche Drehrichtungen haben. Die Freiläufe sind koaxial nebeneinander angeordnet.
Ein besonderes weiterbildendes Merkmal der Erfindung ist darin zu sehen, daß die Klemmkörper des Freilaufs von der Tretkurbelwelle angetrieben werden. Damit wird die Steuerung des Freilaufs zwischen einkuppeln, auskuppeln und der Zwischenposition vereinfacht. Die von den Rücktrittgetrieben nach der Erfindung im Tretlager vorgesehenen Kupplungen sind so ausgebildet, daß Bremselemente zwischen dem Schiffchen und den Kupplungen im übrigen vorgesehen sind.
Bei den Konen-Kupplungen besteht eine baulich einfache Ausgestaltung der Erfindung darin, daß beide als Abtriebskonen ausgebildeten Kupplungselemente in der Zwischenposition des Schiffchens mit Federn gegen das Schiffchen abgestützt sind. Diese Federelemente haben die Aufgabe, eine Verbindung zwischen dem Schiffchen und der jeweiligen Kupplung herzustellen. Damit wird erreicht, daß das Schiffchen der Drehbewegung der Tretlagerwelle zunächst nicht folgt, sondern erst dann mit der Tretlagerwelle dreht, wenn die jeweilige Kupplungsverbindung hergestellt ist. Alternativ sind auch Stirnverzahnungen oder Stirnmitnehmer am Schiffchen und korrespondierend an den Kupplungen ausgebildete Vorsprünge oder Vertiefungen vorgesehen, die in der Mittelstellung des Schiffchens mit beiden Kupplungen in Eingriff sind und mit der einen Kupplung durch das Traversieren des Schiffchens außer Eingriff geraten, bevor die andere Kupplung greift.

In besonderer Ausgestaltung der Konenabstützung ist vorgesehen, daß das Schiffchen in seiner axialen Bewegungsrichtung stets gegen mindestens ein Kupplungselement vorgespannt ist. Entsprechend ist bei formschlüssiger vorläufiger Verbindung des Schiffchens mit den ihm gegenüberliegenden Konen das Schiffchen stets mit mindestens einem Kupplungselement in formschlüssiger Verbindung.

In konkreter Weiterbildung der Erfindung wird vorgeschlagen, daß die Federn als Kurzhubfedern ausgebildet sind. Kurzhubfedern sind z. B. Wellscheiben oder Tellerfedern.
Um einen möglichst kurzen Weg beim Zurücktreten für das Bremsen überwinden zu müssen, muß der Schaltweg des Schiffchens, der ursprünglich vom Pedal zurückgelegt werden muß, möglichst kurz sein. Mit den Kurzhubfedern können Federhübe auf einige Zehntel eines Millimeters begrenzt werden. So werden bei kurzen Hüben hohe Kräfte und Federkonstanten ermöglicht.
Die Erfindung wird im Einzelnen anhand der in der Zeichnung dargestellten Ausführungsbeispiele erläutert.

### Dabei zeigen:

- Fig. 1: und Bremsung;: Ein Tretlager mit Konuskupplungen für Fahrt
- Fig. 2: und Bremsung;: Ein Tretlager mit Freilaufkupplungen für Fahrt
- Fig. 3:: Einen Schnitt nach Linie III-III in Fig.2;
- Fig. 4:: Einen Schnitt nach Linie IV-IV in Fig. 2;
- Fig. 5:: Eine vergrößerte Darstellung eines Bremselements aus Fig. 2

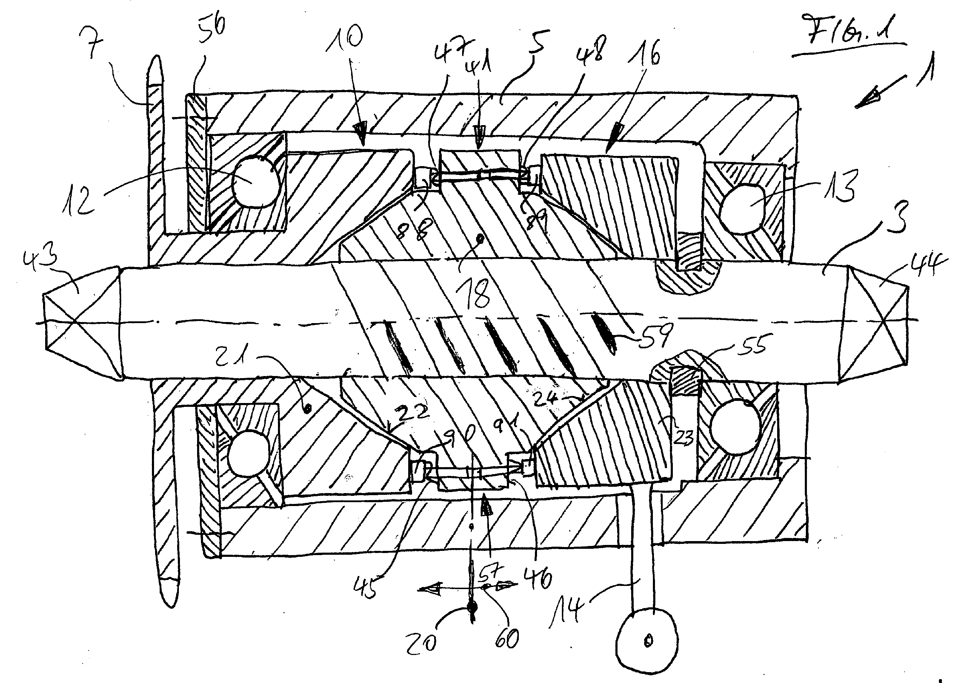

In Fig.1 ist ein Tretlager 1 gezeigt, das in einem Gehäuse 5 eine Tretkurbelwelle 3 in Wälzlagern 12, 13 drehbar lagert und axial fixiert. An den Enden der Tretkurbelwelle 3 sind pyramidenstumpfförmige Vierkante 43, 44 ausgebildet, die der Befestigung von nicht dargestellten Pedalarmen mit Pedalen dienen. Das Gehäuse 5 ist mit einem Deckel 56 verschlossen und trägt an der Deckelseite ein Zahnritzel 7, dessen Antrieb zwischen der Tretkurbelwelle 3 und dem Wälzlager 12 hohlwellenförmig aus dem Gehäuse 5 herausgeführt ist.
Der Abtrieb für das Ritzel 7 ist zusätzlich zur Tretkurbelwelle 3 und koaxial damit aus dem Gehäuse 5 herausgeführt.

In dem Tretlagergehäuse 5 sind zwei trennbare Kupplungen 10, 16 aufgenommen, die als Konus-Kupplungen ausgebildet sind und die jeweils ein Kupplungselement 21, 23 aufweisen, das aus dem Gehäuse 5 herausgeführt ist und dem Antrieb des Kettenritzels 7 oder eines als Hebel radial aus dem Gehäuse 5 herausgeführten Bremsstranges 14 dienen.

Die Kupplungen haben die Aufgabe, die Drehbewegung der Tretkurbelwelle 3 entweder auf das Zahnritzel 7 oder auf den Bremsstrang 14 zu übertragen. Die Kupplungen 10, 16 können nur alternativ das Ritzel 7 oder den als Hebel aus dem Gehäuse 5 herausgeführten Bremsstrang 14, an dessen freiem Ende ein Bowdenzug oder ein Bremszylinder angeschlossen sein können, mit der Tretkurbelwelle 3 verbinden.

Die Konuskupplungen 10 und 16 sind mit der Tretkurbelwelle 3 über ein Schiffchen 18 verbunden. Das Schiffchen 18 ist auf einem Gewindeabschnitt 59 der Tretkurbelwelle 3 drehbar und entsprechend axial verschieblich gelagert. Es trägt in seiner zentralen Bohrung ein entsprechendes Muttergewinde. Das Schiffchen 18 ist als Drehteil ausgebildet, mit zwei Außenkonen als Kupplungselemente 22, 24 an seinen Längsenden. Das Kupplungselement 22 und das Kupplungselement 21 bilden die trennbare Kupplung 10 im wesentlichen. Die Kupplungselemente 23 und 24 bilden entsprechend die Kupplung 16.

Beim Vorwärtstreten der Tretkurbelwelle 3 werden die Kupplungselemente 21 und 22 der Konuskupplung 10 miteinander verbunden und beim Rückwärtstreten die Kupplungselemente 23, 24 der Kupplung 16. Beim Vorwärtstreten verschiebt sich das Schiffchen 18 in der Ansicht nach Fig.1 nach links und bildet eine klemmende Verbindung zwischen den Kupplungselementen 21 und 22 der Kupplung 10 und beim Rückwärtstreten der Tretkurbelwelle 3 verschiebt sich das Schiffchen 18 nach rechts -- in der Ansicht nach Fig.1.

In der eingekuppelten Stellung der Kupplung 10 dreht die Tretkurbelwelle 3 das Zahnritzel 7 schlupffrei. In der eingekuppelten Stellung der Kupplung 16, in der Rücktritt-Situation, stellt das Schiffchen 18 eine drehfeste Verbindung zwischen der Tretkurbelwelle 3 und dem Bremsstrang 14 her.

In Fig.1 ist das Schiffchen 18 in einer Zwischenposition 20 gezeigt. In dieser Zwischenposition 20 ist keine der Kupplungen 10, 16 eingekuppelt. Diese Zwischenposition 20 stellt sich z. B. ein, wenn das Fahrrad abgestellt wird, wenn keine Einwirkung auf die Pedalen erfolgt, oder wenn das Fahrrad antriebs- oder bremsfrei rollt. Zwei Bremsen 41, 57 stellen sicher, daß beide Einkuppelvorgänge, die der Kupplung 10 und die der Kupplung 16, eingeleitet werden können. Durch die Bremselemente 41 und 57 wird sichergestellt, daß bei Betätigung der Pedalen eine Dreh- und Axialbewegung des Schiffchens auf dem Gewindeabschnitt 59 erfolgt, wobei sich das Schiffchen 18 entsprechend dem Doppelpfeil 60 bewegt.

Diese Bremsen 41 und 57 üben nur eine kleine Reibkraft auf die benachbarten Kupplungselemente 21, 23 aus, die nur so groß ist, daß die Reibkraft und die Hangabtriebskraft am Gewindeabschnitt 59 vor dem Eingriff der Kupplungen 10, 16 überwunden wird. Sie geben dem jeweiligen Kupplungsvorgang eine Starthilfe. Die Bremsen 41 und 57 sind in der Nähe der Wandung des Gehäuses 5, also an einem großen Radius bezogen auf die Tretkurbelwelle angeordnet. Sie sind an einem Umfangskragen des Schiffchens 18, symmetrisch auf dessen Umfang verteilt, ausgebildet. Jede Bremse 41, 57 umfaßt zwei nagelartig ausgebildete Bremsschuhe 88, 89 und 90, 91. Die Bremsschuhe sind in Axialbohrungen des Umfangskragens eingesteckt und die Köpfe der Nägel werden von Wellscheiben 45, 46, 47, 48 gegen die Stirnflächen der Abtriebs-Kupplungselemente 21, 23 gedrückt.

Die Bremsen 41 und 57 sind so bemessen, daß die Bremsschuhe 88, 90 von dem Kupplungselement 21 abheben, wenn der Rücktritt zum Eingriff kommt, wenn also die Kupplung 16 eingekuppelt wird. Umgekehrt heben die Bremsschuhe 89, 91 von der Stirnseite des Abtriebs-Kupplungselements 23 ab, wenn die Kupplung 10 greift. Beim Fahrbetrieb gibt es durch die erfindungsgemäße Tretlagerkonstruktion keine Reibungsverluste. Das Kupplungselement 23 der Rücktrittkupplung 16 ist gleitend auf der Tretkurbelwelle 3 gelagert gezeichnet. Es kann auch an seiner Außenseite im Gehäuse 5, z. B. mit einem Wälzlager, gelagert sein. Schließlich kann das Kupplungselement 23 auch mit einem oder zwei Wälzlagern auf der Tretkurbelwelle 3 geführt sein, um die beim normalen Fahrbetrieb auftretende minimale Reibung zu verringern.

Schließlich kann das Fahrrad auch zurückgeschoben werden, ohne daß der Rücktritt greift, wobei keine Pedalbewegung stattfindet und ein eventueller Fahrradständer dem rückdrehenden Pedal nicht blockierend im Wege steht. Alle gängigen Fahrradbremsen werden federnd in die Offenstellung gedrückt. Diese Federkraft hält den aus dem Tretlagergehäuse herausgeführten Bremsstrang 14 in der Offenstellung der (nicht gezeigten) Betriebsbremsen des Fahrrades.

In diesem Falle des Rückwärtsschiebens gibt es an den Bremsen 41, 57 zwar leichte Reibbewegungen, die aber aufgrund der auftretenden geringen Reibkräfte an den Bremsen 41 und 57 vom Fahrradfahrer nicht wahrgenommen werden. Es bedarf keiner zusätzlichen Aktionen des Fahrradfahrers, um das Fahrrad zurückschieben zu können oder die Rücktrittbremse auszuschalten.
Das Kupplungselement 23 für die Rücktrittbremse kann, ähnlich wie das Kupplungselement 21, unter Weglassung des Wellensicherungsringes 55 auch hohlwellenartig aus dem Gehäuse 5 herausgeführt sein, wodurch der Bremsstrang 14 in etwa spiegelbildlicher Anordnung zum Zahnritzel 7 ausgeführt wäre. Alternativ kann das Kupplungselement 23 auch im Gehäuse geführt und gelagert sein.

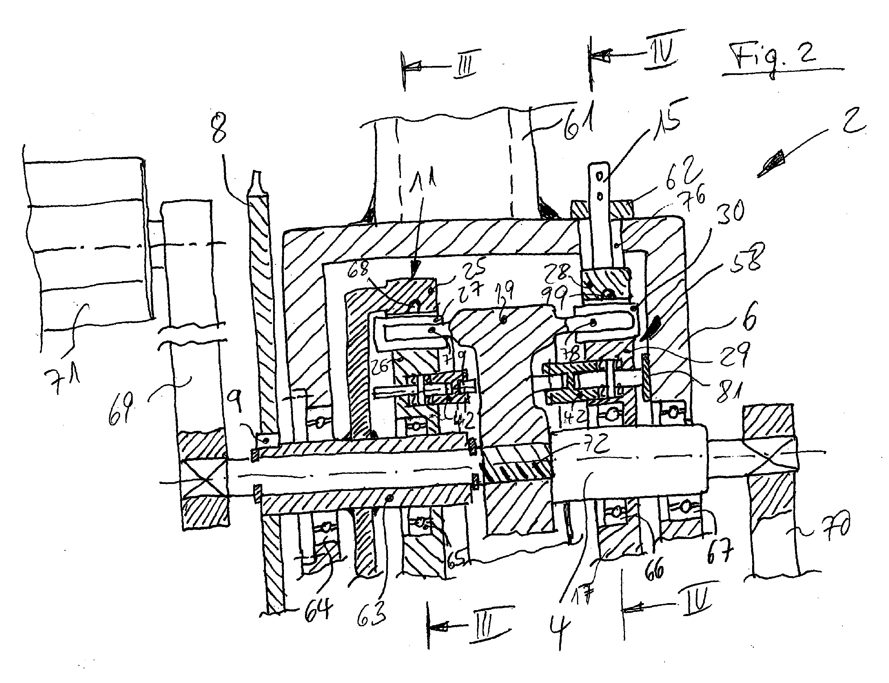

Die in Fig.2 gezeigte Ausführungsform der Erfindung arbeitet in gleicher Weise wie die aus Fig.1, sie unterscheidet sich im wesentlichen dadurch, daß die Konus-Kupplungen durch Freilauf-Kupplungen 11, 17 ersetzt sind.

Das Tretlager 2 aus Fig.2 umfaßt ein Gehäuse 6, in dem eine Tretkurbelwelle 4 in Wälzlagern 64, 67 drehbar und gegen axiale Verschiebung gesichert geführt ist. Außen an dem Gehäuse 6 des Tretlagers 2 greifen in bekannter Weise Rahmenrohre 61 an. Innerhalb des Tretlagers sind die Freilauf-Kupplungen 11 und 17 vorgesehen. Mit der Kupplung 11 wird das Zahnritzel 8 mit den Pedalarmen 69, 70 verbunden, an deren Enden die Pedale 71 angebracht sind. Die Freilauf-Kupplung 17 verbindet die Tretkurbelwelle 4 mit einem Bremsstrang 15, der aus einer schlitzartigen, sich in Umfangsrichtung des Tretlagergehäuses 6 an dessen Umfang erstreckenden Öffnung 76 mit einer Dichtung 62 herausgeführt ist. An diesen Bremsstrang 15 wird das eigentliche Bremssystem des Fahrrades, z. B. mit Felgenbremsen, zusätzlich zu der üblicherweise vorgesehenen Handbetätigung am Lenker des Fahrrades über eine Bremswippe, wie sie von der Handbremse in Autos bekannt ist, angeschlossen. Dieser Bremsstrang 15 kann auch zur Betätigung einer bekannten, leicht zu modifizierenden Naben(rücktritt)bremse verwendet werden.

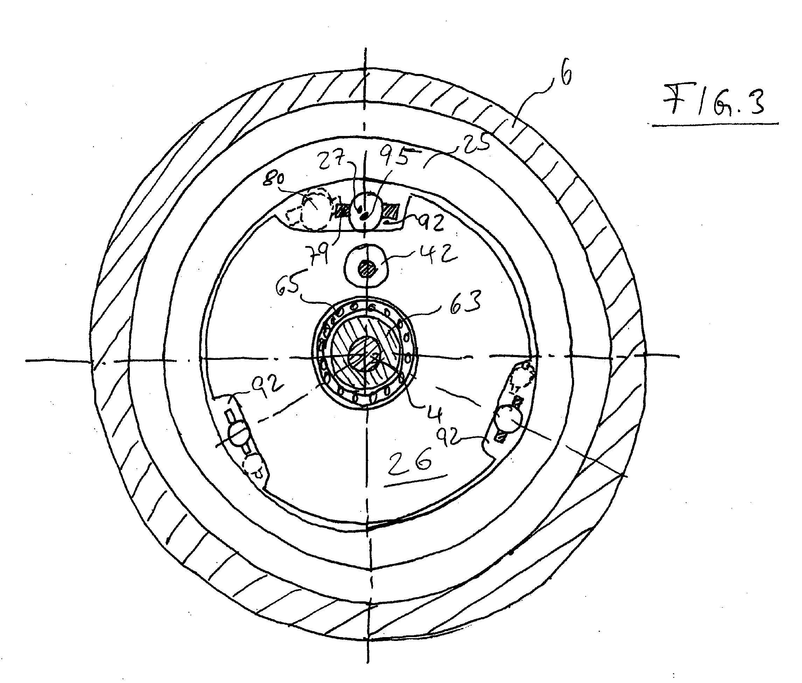

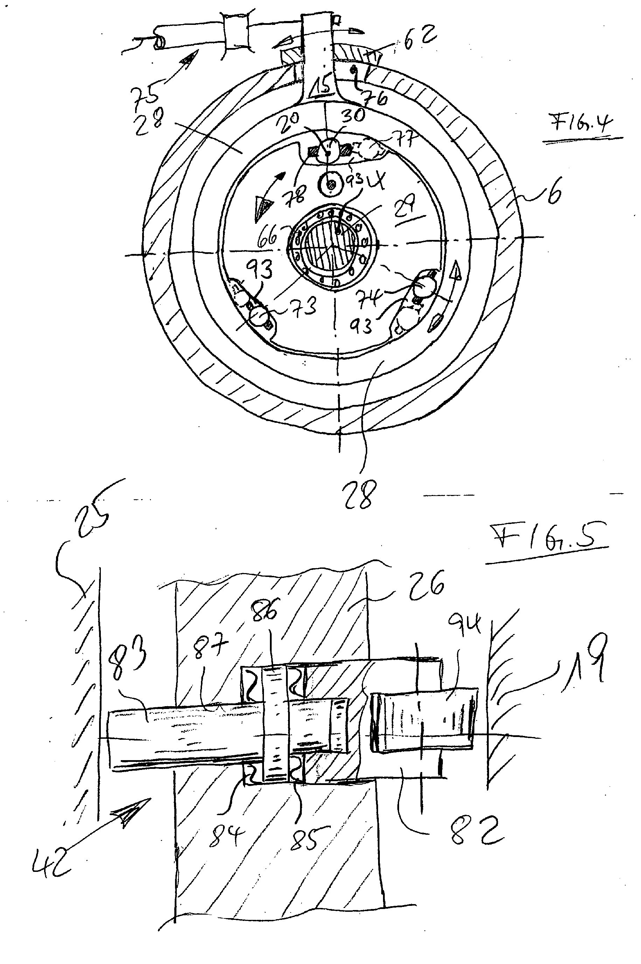

Die beiden Freilaufkupplungen 11 (Fig.3) und 17 (Fig.4) sind an den Längsenden des Gehäuses 6 in dessen Innerem angeordnet. Zwischen den beiden Kupplungen 11, 17 ist ein Schiffchen 19 vorgesehen, daß in Abhängigkeit von seiner und der Drehrichtung der Tretkurbelwelle den Freilauf 11 oder den Freilauf 17 greifen läßt. Das Schiffchen 19 ist auf einem Gewindeabschnitt 72 der Tretkurbelwelle 4 drehbar und zwischen zwei Axialanschlägen geringfügig um ca. 1 mm axial verschiebbar gelagert. Die geringfügige Verschiebung auf der Tretkurbelwelle 4 erfolgt automatisch mit der Änderung der Drehrichtung der Tretkurbelwelle 4.

Das Schiffchen 19 steuert Klemmkörper 27, 30 in den Kupplungen 11 und 17. Das Schiffchen 19 weist in der Nähe seines Umfangs in axialer Richtung abkragende, in die jeweiligen Freiläufe eingreifende, paarweise angeordnete Finger 78, 79 auf, die nach Art eines Wälzlagerkäfigs die Position der Klemmkörper bestimmen. Die Klemmkörper sind vorzugsweise zylindrisch ausgebildet, aber es können auch aus zylindrischen Abschnitten gebildete Klemmkörper oder Kugeln zum Einsatz kommen.

Durch Drehen der Tretkurbelwelle 4 in die eine oder andere Richtung werden alternativ die Freiläufe 11, 17 von dem Schiffchen 19 in ihre Klemm- bzw. Mitnahme-Position gebracht.

Weiterhin sind als Starthilfe für Kupplungsvorgänge beim Einkuppeln Bremselemente 42 in jeder Freilauf-Kupplung 11, 17 vorgesehen. Die Bremselemente sind gleichartig und exemplarisch in Fig.5 dargestellt.

Die Freilauf-Kupplung 11 besteht aus einem wie ein Hohlrad ausgebildeten äußeren Kupplungselement 25, dem Klemmkörper 27, von dem in Fig.3 drei symmetrisch angeordnete Exemplare gezeigt sind, und einem als Stützscheibe ausgebildeten Kupplungselement 26. In diesem Kupplungselement 26 sind am Umfang Ausnehmungen angeordnet, in denen die Klemmkörper 27 und deren Bedienelemente, das sind die Finger 78, 79, eingebracht sind. Das als Hohlrad ausgebildete Kupplungselement 25 bildet mit seinem Innenumfang eine der beiden Keilflächen, in die der Klemmkörper 27 von dem Schiffchen 19 mit seinen Fingern 79 hineingedrückt wird. Die zweite Keilfläche wird von dem Grund der Ausnehmung 92 (Fig.3) in dem als Stützrad ausgebildeten Kupplungselement 26 gebildet.

Das als Hohlrad ausgebildete Kupplungselement 25 trägt auf seiner Drehachse eine nabenförmige Hohlwelle 63, die drehbar und axial festgelegt auf der Tretkurbelwelle 4 gelagert ist und mit einer Paßfeder eine drehfeste Verbindung 9 mit dem Kettenritzel 8 bildet.

In dem als Hohlrad ausgebildeten Kupplungselement 25 ist eine ringförmige Innennut 68 vorgesehen, in der ein nicht gezeigter Federring einliegt, der die Klemmkörper 27 in den Ausnehmungen 92 (Fig.3) im inneren Kupplungselement 26 eindrückt, um deren Position zu kontrollieren.

Das als Stützscheibe ausgebildete Kupplungselement 26 ist auf der nabenförmigen Hohlwelle 63 mit einem Wälzlager 65 gelagert.

Die Bremse 42 wird beim -- hier nicht dargestellten -- Fahrbetrieb von dem in Fig.2 nach links verschobenen Schiffchen betätigt. Sie synchronisiert das nach Art einer Stützscheibe ausgebildete Kupplungselement 26 und das als Hohlrad ausgebildete Kupplungselement 25 und erlaubt so den Start des Klemmvorgangs des in den Klemmspalt eingedrückten Klemmkörpers 27.

Die beiden Kupplungen 11 und 17 wirken alternativ und in Abhängigkeit von der Drehrichtung der Tretkurbelwelle 4. In einer nicht gezeigten Zwischenstellung sind beide Kupplungen getrennt.

Die Kupplung 17, die Rücktrittkupplung, ist in Fig.2 in Eingriff gezeigt. Das Schiffchen 19 ist in seiner rechten Position, es liegt axial gegen einen Kragen der Tretkurbelwelle 4 an und drückt mit seinem Finger 78 den Klemmkörper 30 in Umfangsrichtung des Tretlagers in einen Klemmspalt zwischen einem als Stützscheibe ausgebildeten inneren Kupplungselement 29 und einem als Hohlrad ausgebildeten äußeren Kupplungselement 28. Das als Stützscheibe ausgebildete Kupplungselement 29 hat, wie die zum Freilauf 11 beschriebene Stützscheibe 26, Ausnehmungen 93 an seinem Umfang, deren Grundfläche eine der beiden Keilflächen für die Klemmkörper 30, 73, 74 (s. Fig.4) aufweist.

Eine Bremse 42 bremst und synchronisert das Kupplungselement 29 und das Gehäuse 6. Dazu stützt sich die Bremse 42 gegen einen Bremsbelag 81 an der Innenseite der Stirnwand des Gehäuses 6 ab. In dieser Position kann der Finger 78 den Klemmkörper 30 in den selbsthemmenden Klemmspalt eindrücken.

In Fig.3 und Fig.4 ist diese Klemmposition 77, 80 der Klemmkörper 30, 73, 74 bzw. 27 gestrichelt dargestellt. In der in ausgezogenen Linien dargestellten Situation befindet sich der Freilauf in einer Zwischenposition 95, 20, wie sie sich bei abgestelltem Fahrrad einstellt. Beim Fahrbetrieb nehmen die Finger 78 des Schiffchens 19 die Klemmkörper 30, 73, 74 und das innere Kupplungselement 29, das auf der Tretkurbelwelle mit einem Wälzlager 66 gehalten ist, mit. Eine in Fig.2 gezeigte Ringnut 99 ist für eine nicht gezeigte Ringfeder bestimmt, die alle Klemmkörper 30, 73, 74 radial nach innen auf den Grund der Ausnehmungen 93 drückt und so unnötige Reibung beim Fahrbetrieb vermeidet.

In Fig.5 ist die Bremse 42 für das Kupplungselement 26 aus Fig.2 gezeigt. Die Bremse umfaßt einen Schieber 82, der parallel zur Tretlagerwelle ausgerichtet und in dieser Richtung verschieblich gelagert ist und der auf seiner dem Schiffchen 19 zugewandten Seite eine Rolle 94 trägt. Der Schieber 82 ist im Kupplungselement 26 in axialer Richtung beweglich und gegen Verdrehen um seine Längsachse gesichert in einer abgesetzten Bohrung 87 geführt und stützt sich federnd gegen einen Bremsstift 83 ab. Der wiederum ist federnd gegen das Kupplungselement 26 abgestützt. Federn 84, 85 sind beidseits eines Kragens 86 am Bremsstift 83 innerhalb des Kupplungselements 26 angeordnet.

Mit dieser Anordnung wird erreicht, daß zwischen dem Schiffchen 19 und dem Schieber 82 bzw. dem Kupplungselement 26 eine kleine Bremswirkung durch Rollreibung erzielt wird, während zwischen dem Bremsstift 83 und dem Hohlrad 25 eine hohe Bremswirkung erzielt wird, die das als Hohlrad ausgebildete Kupplungselement 25 und das Kupplungselement 26 zu Beginn des Fahrbetriebes (bei der Kupplung 11) synchronisieren und das Schiffchen 19 in seiner Bewegung kaum hindern.

In dieser synchronisierten Situation kann das Schiffchen 19 mit seinem Finger 79 den Kupplungsvorgang an der Kupplung 11 einleiten.

Durch die als Wellscheiben ausgebildeten hintereinander geschalteten Kurzhubfedern 84, 85 wird erreicht, daß nur überschaubare Kräfte zwischen dem Schiffchen 19 und dem Kupplungselement 25 auftreten können und daß beim Umschalten des Schiffchens 19 der Bremsstift 83 von dem Kupplungselement 25 abhebt.

## Patentansprüche

1. Tretlager (1, 2) für Fahrräder
- mit einer Tretlagerwelle (3, 4),
- einem Gehäuse (5, 6),
- in dem die Tretlagerwelle (3, 4) drehbar gelagert ist,
- in dem die Tretlagerwelle (3, 4) gegen axiale Verschiebung gesichert ist, **gekennzeichnet durch**
- einen Abtrieb für mindestens ein Kettenritzel (7, 8) zusätzlich zu der Tretlagerwelle.
- eine trennbare Kupplung (10, 11) im Gehäuse (5, 6), zwischen der Tretlagerwelle (3, 4) und dem Abtrieb für das Kettenritzel (7, 8)
- einen Bremsstrang (14, 15), der aus dem Gehäuse (5, 6) herausgeführt ist,
- eine trennbare Kupplung (16, 17) im Gehäuse (5, 6) zwischen dem Bremsstrang (14, 15) und der
Tretlagerwelle (3, 4) und
- ein **durch** die Tretlagerwelle (3, 4) betätigtes Schiffchen (18, 19), das alternativ
- die Ritzelkupplung (10, 11) schaltet,
- die Bremskupplung (16, 17) schaltet oder
- in einer Zwischenposition (20, 45) beide Kupplungen (10, 11, 16, 17) trennt.

2. Tretlager (1, 2) nach Anspruch 1, **dadurch gekennzeichnet, daß** die Kupplungselemente (21, 22, 23, 24, 25, 26, 27, 28, 29, 30, 73, 74) reibschlüssig kuppeln.

3. Tretlager (1, 2) nach Anspruch 1, **dadurch gekennzeichnet, daß** die Kupplungen als Konus-Kupplungen (10, 16) ausgebildet sind.

4. Tretlager (1, 2) nach Anspruch 1 oder 2, **dadurch gekennzeichnet, daß** die Kupplungen als Freilaufkupplungen (11, 17) ausgebildet sind.

5. Tretlager (1, 2) nach Anspruch 7, **dadurch gekennzeichnet, daß** es zwei Freilauf-Kupplungen (11, 17) umfasst, die unterschiedliche Drehrichtungen aufweisen.

6. Tretlager (1, 2) nach Anspruch 4, **dadurch gekennzeichnet, daß** die Klemmkörper (27, 30, 73, 74) von der Tretlagerwelle (4) angetrieben werden.

7. Tretlager (1, 2) nach einem der vorangegangenen Ansprüche, **dadurch gekennzeichnet, daß** Bremselemente (41, 42) zwischen dem Schiffchen (18, 19) und den Kupplungen (10, 16, 11, 17) im übrigen vorgesehen sind.

8. Tretlager (1) nach Anspruch 2, **dadurch gekennzeichnet, daß** beide als Abtriebskonen ausgebildeten Kupplungselemente (21, 23) in der Zwischenposition (20) des Schiffchens (18) mit Federn (46, 47) gegen das Schiffchen (18) abgestützt sind.

9. Tretlager (1) nach Anspruch 3, **dadurch gekennzeichnet, daß** das Schiffchen (18) in seiner axialen Bewegungsrichtung stets gegen mindestens ein Kupplungselement (21, 23) vorgespannt ist.

10. Tretlager (1, 2) nach Anspruch 8 oder 9, **dadurch gekennzeichnet, daß** die Federn (45, 46, 84, 85) als Kurzhubfedern ausgebildet sind.
